# DEMANDE DE BREVET EUROPEEN

(11) **EP 2 859 795 A1**
(43) Date de publication de la demande: **15.04.2015**
(21) Numéro de dépôt: 13364002.9
(22) Date de dépôt: 11.10.2013
(51) Int. Cl.: A01M 21/04

(54) **Appareil de désherbage multifonction basse et haute pression eau chaude et vapeur d'eau pour usage professionnel installé sur véhicule, à régulation permanente de température constante et réglable pour usage intensif**

(71) Demandeur: Oeliatec, 35136 Saint Jacques de la Lande (FR)
(72) Inventeur: Barre, Jean Pierre, 35230 Saint Armel (FR)

(57) **Abrégé**

Appareil autonome de désherbage multifonction basse et haute pression eau chaude et vapeur d'eau pour usage professionnel installé sur véhicule, à régulation permanente de température constante et réglable pour un usage intensif, dont la fonction principale est le désherbage eau chaude instantané à plus de 110° Celsius en sortie de lance aux fins d'éradiquer en totalité et sans additif les plantes sur les parties aériennes - collet et radicelle, et disposant de fonctions complémentaires de désherbage vapeur, lavage haute pression et arrosage de végétaux; caractérisée par: 1) une alimentation électrique basse tension autonome par batteries à décharge lente(n) ; 2) une régulation permanente de la chaudière (g) gérée par automate (e) permettant le maintien constant de la température souhaitée durant toute la durée du poste de travail ; 3) l'intégration d'un système de filtration intégré et un circuit de distribution d'eau permettant l'utilisation d'eaux recyclées ; 4) des circuits et programmes intégrés (automate) à l'appareil monobloc permettant différents usages de: désherbage eau chaude (I), désherbage vapeur (I), arrosage public (k), lavage haute pression (m), et hydro curage (m) ; 5) une buse spécifique aux fonctions désherbage eau chaude et désherbage vapeur disposant d'un mécanisme interne de répartition de l'eau en périphérie externe de la dite buse ; 6) une gestion du débit d'eau géré par automate aux fins de privilégier une température haute en sortie de chaudière ; 7) un système de géolocalisation (o) relié (f6) à l'automate (e) permettant d'obtenir une traçabilité géographique des traitements effectués par l'appareil en dissociant la nature des traitements par le fait du programme de l'automate.

## Description

### Etat du sachant

IL existe deux grandes familles de machines de désherbage thermique à usage professionnel: celle où la production de chaleur agit directement sur la plante (bruleurs à flamme, infrarouge, action du soleil...), et celle qui fait appel à un média (eau avec ou sans adjuvant, vapeur).

Dans la famille des appareils de désherbage faisant appel à un média (eau avec ou sans adjuvant, vapeur), objet du présent brevet, on distingue celles de désherbage eau chaude, et celle qui rejettent de la vapeur d'eau, avec d'éventuels additifs :
En ce qui concerne les machines de désherbage eau chaude, les limites de ces machines sont nombreuses :
   - Tout d'abord, l'eau qui sort de la lance est inférieure à 110° Celsius, dans ces conditions l'eau est tout juste suffisante à la destruction de la chlorophylle, mais ne suffit pas à détruire les radicelles et collets,
   - Cette limite de température occasionne une consommation d'eau et des temps de traitement plus importants, puisqu'il s'agit de compenser le manque de température par un temps de traitement amplifié,
   - Pour limiter la consommation d'eau, une technique a été mise au point, consistant à ajouter un ou plusieurs adjuvants (amidon, et autres éléments organiques appelés à retenir les calories) qui ont pour fonction de maintenir la chaleur en sortie de lance. En revanche cela nécessite des adjuvants couteux, tandis que les surfaces traitées ne sont plus praticables immédiatement après le passage de l'application (sols sales et glissants),
   - Enfin les machines à désherber par pulvérisation d'eau chaude présentent deux autres inconvénients majeurs au regard des enjeux environnementaux : elles fonctionnent avec un moteur thermique qui entraine la pompe (nuisances sonores et pollution de l'air), et ne peuvent fonctionner qu'avec de l'eau de réseau (5m3 d'eau jour environ);

Les machines de désherbage à vapeur : l'eau est diffusée entre 130 et 170° Celsius en bout de lance. Ce principe a pour avantage de réduire la consommation d'eau. Cependant, cette technologie a elle aussi de nombreux inconvénients :
- La vapeur d'eau pourtant sortie entre 130 et 170° de la lance chute plus vite en température que le système d'eau chaude, car contrairement à l'eau qui est en contact direct avec la plante, la vapeur d'eau ne dépose que des microgouttelettes.
- En rendement comparé, cette technologie vapeur d'eau est de 0,7Km/h environ pour 2Km/h environ pour les machines à traitement en eau chaude. Ceci s'explique par le fait que la lance étant positionnée à 10 cm de la plante (quelque soient les technologies), un temps de traitement plus important est constaté du fait de l'évaporation de la vapeur d'eau.
- De même que l'efficacité à traiter les collets et radicelles est réduite à néant, en raison que l'eau chaude pénètre l'ensemble de la plante (chlorophylle, collet et radicelle), tandis que la vapeur d'eau ne traite que la partie superficielle de la plante. En conséquence il est nécessaire d'assurer 4 à 5 traitements à l'année, pour 3 passages en désherbage eau chaude,
- Ces machines sont alimentées en électricité demandant un branchement électrique sur réseau-groupe électrogène ou véhicule, ce qui pose des problèmes d'autonomie (raccordement en extérieur souvent difficile).

Quelque soient les technologies eau ou vapeur développées, il est constaté que :
- Chacune de ces machines fonctionne avec une régulation relative de la chaudière, en raison de l'amplitude des températures acceptées qui n'apportent aucune température constante (régulations thermostatiques). Ce principe de régulation arrête le chauffage une fois la température atteinte, pour redémarrer à la température minimum programmée (principe de fonctionnement On/Off). La conséquence de ce système est de ne pas avoir une température en sortie de lance constante et régulière.
- Que le fonctionnement de ces machines s'exerce avec de l'eau de réseau, à l'exclusion d'eaux recyclées,
- Aucune technologie développée ne permet de cumuler en un seul appareil les technologies eau chaude et vapeur d'eau,
- Aucune technologie de machine à désherber ne permet d'additionner des fonctions :
   o lavage haute température haute pression à usage professionnel (plus de 150 bars),
   o arrosage sans pollution sonore, pourtant nécessaire en cas d'arrosage matinal (notamment en centre-ville),
   o hydro curage eau chaude : nécessaire notamment pour déboucher les réseaux d'évacuation, notamment du fait de bouchons de graisse curables à l'eau chaude.

Pour la bonne compréhension du sujet, il est à rappeler que tous les systèmes de désherbage thermiques faisant appel à un média eau ou vapeur sont composés : d'une cuve recevant l'eau, d'une pompe à eau qui active le réseau hydraulique, d'un système de chauffe situé dans le corps de l'appareil qui amène l'eau à la température souhaitée, de lances de pulvérisation indépendantes reliées à l'appareil, et d'un système thermostatique agissant sur l'allumage ou l'extinction de la chaudière (modes ON/OFF) au regard d'une sonde disposée en sortie du corps de chauffe qui informe de la température d'eau obtenue.

Enfin, en matière de matériels de désherbage à usage professionnel, il existe deux catégories d'appareils : ceux véhiculés aux fins de traiter de grandes surfaces (domaine de notre invention), et ceux destinés à un traitement de petites surfaces.

### Présentation de l'invention:

L'invention porte sur un Appareil autonome de désherbage monobloc multifonction basse et haute pression eau chaude (supérieure à 110° Celsius en sortie de lance) et vapeur d'eau pour usage professionnel véhiculé. L'appareil dispose :
- d'un automate (e) de régulation de la température d'eau souhaitée en sortie de chaudière (h), afin de garantir le traitement de la plante jusqu'à ses racines (chlorophylle, collets et radicelles). Pour se faire, cet automate relève constamment la température acquise en sortie de chaudière (f1), et commande immédiatement à la fois la puissance du corps de chauffe (f2) et le débit de l'eau par action sur la pompe à eau basse pression (f3et d). Cette action sur le fonctionnement général de l'appareil en mode désherbage (I) est caractérisée par le fait que l'automate (e) fonctionne sur un principe de régulation permanente du débit d'eau (réduction ou augmentation du débit de l'eau par l'automate pour maintenir la température, tout en fournissant de l'eau en continue) (f3 et d) et de puissance de chauffe (l'automate va constamment altérer ou augmenter la température de chauffage en fonction de la température de l'eau) (f2 et g) sans arrêter la chaudière (g), de façon à fournir en continue une eau (I) parfaitement adaptée aux exigences de traitement (maintien permanent du degré exigé en sortie de chaudière). Ce fonctionnement est opposable aux machines avec thermostats (dits à régulation relative) dont l'action sur la chaudière est binaire (chaudière qui chauffe à plein, chaudière arrêtée), ce qui a pour limite de faire baisser la température tant que la commande de réactivation de chaudière n'est pas réenclenchée par le thermostat. Par ailleurs et dans le cadre de notre invention, l'utilisateur peut adapter la température et le débit d'eau selon les variétés à traiter et la vitesse d'avancement.
- d'une d'alimentation de la pompe à eau (d) par système électrique autonome de batterie à décharge lente rechargeable (n), alimentant à la fois l'automate (e)- la pompe à eau basse pression (d) et la chaudière (g) (allumage, ventilation). Cette alimentation permet une autonomie d'une journée de travail et évite ainsi la connexion à des réseaux de production électriques (groupes électrogènes, moteurs thermiques, raccordement au réseau électrique...),
- d'un système de filtration de l'eau, constituée d'un filtre grossier en entée (filtre moyen (b)) et d'un filtre fin en sortie (filtre fin (c)) de cuve (a), permettant ainsi l'utilisation d'eaux recyclées sur les fonctions désherbage eau chaude (I), nettoyeur haute pression(m), hydro-curage (m) et arrosage (k),
- d'un système d'arrosage (k) par ouverture du pressostat(i) réglé sur un débit plus important et piloté par l'automate (f4), évitant la circulation par le corps de chauffe. L'action d'arrosage se réalise sans nuisance sonore du fait de l'activation de la pompe à eau (d) électrique,
- d'un système nettoyeur haute pression (m) eau chaude à usage professionnel (plus de 150 bars), par intégration (f5) d'une pompe thermique (j) dans l'appareil. L'automate (e) règle un débit d'eau important et actionne le corps de chauffe (g) avec régulation continue de la température de chauffe (f1 en remontée et f2 en commande). Elle permet de disposer d'une température constante (h), contrairement à tous les nettoyeurs professionnels haute pression qui commandent la chaudière selon un mode binaire On/Off (principe du thermostat qui active la chaudière en pleine flamme, ou l'arête totalement),
- d'un mode hydro-curage eau chaude (m), agissant selon le même principe que le nettoyeur haute pression eau chaude avec changement de la lance,
- d'un système de désherbage vapeur (I) composé d'un programme réduisant la vitesse du moteur (D et F3) et augmentant la température de l'eau chaude (F1, F2 et G).En mode désherbage eau chaude (l), l'invention permet de réduire les quantités d'eau utilisées: de 5m3 jour sur des machines conventionnelles, la consommation est de 1 m3 jour pour l'invention. Cette performance s'explique par une conception particulière de la buse de pulvérisation de désherbage (plan B) et la gestion de la régulation par automate (e).

L'automate (e) est couplé à un système de géolocalisation (o) permettant de gérer le planning de passage de l'appareil de désherbage sur l'espace à gérer. En effet l'automate permet d'informer (f6) l'appareil de géolocalisation (o) des zones traitées en tenant compte du mode de traitement (eau chaude, vapeur d'eau, arrosage, nettoyeur pression haute température...), alors qu'un appareil de géolocalisation installé sur une machine sans automate (thermostat par exemple) informerait des points de passage de la machine sans dissocier si celle-ci est en fonctionnement ou non. En conséquence, et ne relevant que les zones durant lesquelles l'appareil est en fonctionnement, et en tenant compte des programmes actionnés, la géolocalisation fournit un planning de traitement (et non de passage sur l'espace) en tenant compte des différents modes de travail.

La pompe à eau électrique (d) est conçue pour travailler en basse tension (q) afin de garantir une parfaite sécurité au travail (les normes en vigueur imposant une prise de terre à partir de 25 volts, notre système nous émancipe de cette contrainte) et améliorer l'autonomie de la machine. Ce corps de chauffe (g) bénéficie également du système de régulation (e), évitant un fonctionnement binaire, notre système de régulation du corps de chauffe porte sur une position fermée, une ouverture à grand débit, et des positions intermédiaires.

Une buse (plan 2) disposant d'un réducteur de débit(r) est positionnée en fin de lance. Le réducteur de débit (r) permet d'optimiser le remplissage du serpentin de la chaudière afin d'améliorer le chauffage, ce qui amène à sortir une eau plus chaude que les systèmes conventionnels. Par ailleurs le réducteur de débit (r) provoque un mouvement circulaire de l'eau. A la suite de ce réducteur, la buse a une ouverture (s) de forme d'entonnoir distribuant de l'eau sur la sphère de l'entonnoir (et non au centre de la buse), ce qui maintient une surface de traitement importante tout en optimisant l'autonomie de l'appareil. La buse dispose d'une ouverture assez large pour ne pas se boucher et laisser passer les déchets organiques et minéraux.

D'autre part, au regard des fonctions nettoyeurs hautes pression, hydro-curative et arrosage développées par l'invention, celle-ci dispose des équipements spécifiques aux outils précités :
- Désherbage vapeur d'eau : pas d'équipement supplémentaire,
- Nettoyeur haute pression eau chaude : pompe thermique haute pression (j).

Il est utile de préciser que la présente invention est destinée à être installée sur un véhicule, aux fins de disposer de la mobilité nécessaire pour agir tout au long d'un poste de travail dans le cadre d'un usage professionnel (espaces verts, traitement de voie publique, autoroute...).

Les caractéristiques fonctionnelles de l'invention résultent de conceptions spécifiques sur l'automate de commande de l'appareil (e) : qui sur une programmation spécifique, relève les données des appareils de contrôle = température de l'eau (f1) en sortie de chaudière et données émanant du thermostat (h). II commande la pompe (débit de l'eau (d et f3)) et la température de la chaudière (g) (actions sur la ventilation et débit combustible (f2). Selon la fonction commandée par l'utilisateur, l'automate (e) active des programmes spécifiques caractérisés par :
- fonction désherbage eau chaude (I) : réglage de température aux alentours de 118° Celsius, activation de la pompe à eau (f3 et d) et allumage du corps de flamme (f2 et g), position pleine flamme (ventilation et débit), contrôle de température (f1), arrivé à température, actionnement des positions de températures intermédiaires (ventilation et débit) pour maintien en température,
- fonction désherbage vapeur d'eau (I): réglage de température proche de 140° Celsius, activation de la pompe à eau (f3 et d) et allumage du corps de flamme (f2 et g), réduction du débit de pompe (f3 et d), pleine flamme (f2 et g)), contrôle de température (f1), actionnement des positions intermédiaires pour maintien en température (f2 et g),
- fonctions nettoyage haute pression (m) : montée en température selon le seuil demandé par l'utilisateur (g), contrôle de température (f1) et activation des positions de température intermédiaire de chaudière (g) pour maintien de la température demandée en sortie,
- fonction arrosage (k): l'automate (e) agit sur le débit de la pompe (d) en position grand débit, le pressostat (i) conduit l'eau en sortie d'arrosage (k),
- hydro curage : agit selon le même mode que la fonction nettoyage haute pression,

Plan A : Circuit hydraulique et électrique de l'invention

Plan B : Shéma buse

### Glossaire :

A : cuve à eau
B : filtre moyen eau
C : filtre fin eau
D : pompe eau électrique basse pression et basse tension E : automate
F1 : information retour de température en sortie de chaudière
F2 : commande de régulation de chaudière
F3 : commande de régulation de la pompe à eau
F4 : commande d'arrosage
F5 : information d'activation de la pompe Haute Pression
F6 : information de géolocalisation
G : chaudière
H : thermostat
I : pressostat
J : pompe à eau thermique Haute Pression
K : sortie d'arrosage
L : sortie basse pression fonctions désherbage eau et vapeur
M : sortie Haute Pression et hydro curage
N : batterie d'alimentation à décharge lente de l'automate et de la pompe à eau basse pression
O : appareil de géolocalisation

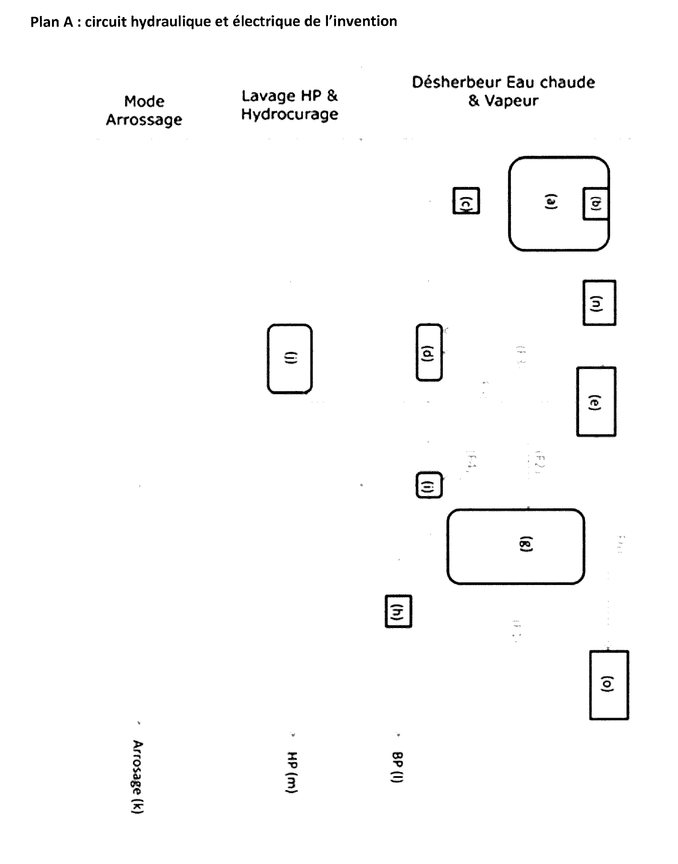

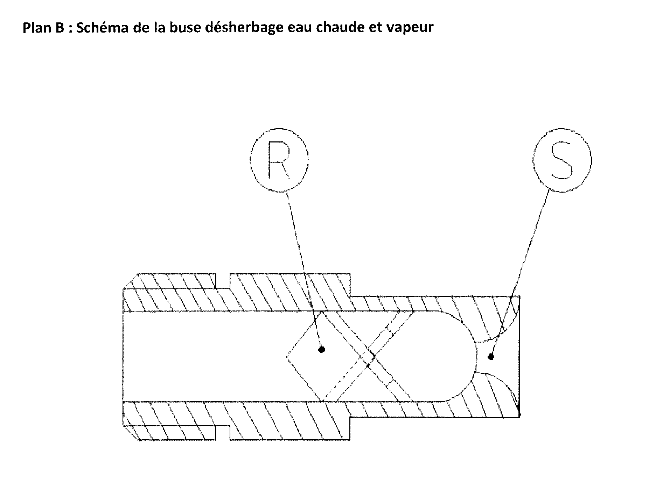

## Revendications

1. Appareil autonome de désherbage multifonction basse et haute pression eau chaude et vapeur d'eau pour usage professionnel installé sur véhicule, à régulation permanente de température constante et réglable pour un usage intensif, dont la fonction principale est le désherbage eau chaude instantané à plus de 110° Celsius en sortie de lance aux fins d'éradiquer en totalité et sans additif les plantes sur les parties aériennes - collet et radicelle, et disposant de fonctions complémentaires de désherbage vapeur, lavage haute pression et arrosage de végétaux ; **caractérisée par** : 1) une alimentation électrique basse tension autonome par batteries à décharge lente(n) aux fins d'alimenter la pompe à eau - l'automate et la chaudière permettant une autonomie de 8 heures sans discontinue correspondant à un poste de travail, 2) une régulation permanente de la chaudière (g) gérée par automate (e) permettant le maintien constant de la température souhaitée aux fins d'obtenir la température nécessaire à l'éradication des plantes : chlorophylle, radicelles et collets durant toute la durée du poste de travail, 3) l'intégration d'un système de filtration intégré et un circuit de distribution d'eau adapté permettant l'utilisation d'eaux recyclées, 4) des circuits et programmes intégrés (automate) à l'appareil monobloc permettant différents usages de: désherbage eau chaude (I), désherbage vapeur (I), arrosage public (k), lavage haute pression (m), et hydro curage (m), 5) une buse spécifique aux fonctions désherbage eau chaude et désherbage vapeur disposant d'un mécanisme interne de répartition de l'eau en périphérie externe de la dite buse, épousant sa forme de sortie en entonnoir, répartissant et concentrant l'eau ou la vapeur d'eau sur la zone à traiter - diffusion de l'eau par jet prenant la forme d'une cloche, permettant ainsi une économie d'eau substantielle et un gain d'autonomie en rapport 6) une gestion du débit d'eau géré par automate aux fins de privilégier une température haute en sortie de chaudière ce qui optimise la consommation de l'eau , 7) un système de géolocalisation (o) relié (f6) à l'automate (e) permettant d'obtenir une traçabilité géographique des traitements effectués par l'appareil en dissociant la nature des traitements par le fait du programme de l'automate.

2. Appareil autonome de désherbage multifonction basse et haute pression eau chaude et vapeur d'eau pour usage professionnel selon la revendication 1 qui dispose d'une alimentation basse tension à décharge lente rechargeable (n) autorisant l'utilisation de la machine en toute sécurité sans usage de prise de terre sur une autonomie d'une journée de travail, **caractérisée par** : un voltage inférieur à 25 volts, une programmation spécifique (e) dans le but d'optimiser le rendement énergétique, l'utilisation de moteurs basse tension pour l'alimentation de la chaudière, et l'installation de batteries à décharge lente (n).

3. Appareil autonome multifonction basse et haute pression eau chaude et vapeur d'eau pour usage professionnel selon la revendication 1, la machine est commandée par un automate (e) disposant d'un programme spécifique permettant le maintien constant de la température de l'eau souhaitée selon les fonctions sollicitées, **caractérisée par** activation (f2) immédiate de la chaudière (g) et du débit d'eau (f3 et d) au regard des informations permanentes collectées de contrôle de la température en sortie de chaudière (f1 et h), cette régulation a pour objet que la chaudière modifie sa puissance de chauffe sur des positions intermédiaires sans s'arrêter, ce qui garantit le maintien en continue de la température de l'eau traitée, à la différence de systèmes thermostatiques obérant une action On/Off sur le corps de chauffe.

4. Appareil autonome de désherbage multifonction basse et haute pression eau chaude et vapeur d'eau pour usage professionnel, selon la revendication 1 l'utilisation d'eau recyclée sur la désherbeuse autonome multifonction est **caractérisée par** une double système de filtration, en entrée filtre moyen (b) et sortie de cuve(a) à eau filtre fin (c), et une buse conique en sortie de lance disposant d'une ouverture assez importante(r) pour ne pas se boucher et laisser passer les déchets organiques et minéraux.

5. Appareil autonome de désherbage multifonction basse et haute pression eau chaude et vapeur d'eau pour usage professionnel selon la revendication 1 **caractérisée en ce que** la buse spécifique aux fonctions de désherbage eau chaude et vapeur dispose d' un mécanisme interne (r) freinant le débit de l'eau dans le triple objectif d'économiser sa consommation, d'améliorer la diffusion circulaire (s) sur toute la surface à traiter, et d'optimiser le remplissage du serpentin de la chaudière (g) afin d'améliorer le chauffage, ce qui amène à sortir une eau plus chaude que les systèmes conventionnels.

6. Appareil autonome de désherbage multifonction basse et haute pression eau chaude et vapeur d'eau pour usage professionnel selon les revendications 1 et 5 **caractérisée en ce que** la buse spécifique comporte un double mécanisme : interne (r) pour créer une turbulence améliorant la vitesse d'eau chaude en sortie tout en offrant un passage assez large pour laisser passer les déchets organiques, externe (s) en diffusion de l'eau par jet en forme d'entonnoir permettant à la fois une diffusion circulaire et canalisée de l'eau sur toute la surface à traiter, la réunion de ces mécanismes permet de maintenir une eau à plus haute température du fait du temps réduit par la vitesse d'extraction et parfaitement diffusée sur la surface à traiter.

7. Appareil autonome de désherbage multifonction basse et haute pression eau chaude et vapeur d'eau pour usage professionnel selon la revendication 1, la fonction désherbeur eau chaude de la machine est **caractérisée par** une température et un débit d'eau réglables par l'utilisateur selon les variétés à traiter et la vitesse de passage, cette fonction est permise par le menu de l'automate (e),

8. Appareil autonome de désherbage multifonction basse et haute pression eau chaude et vapeur d'eau pour usage professionnel selon a revendication 1, **caractérisée en ce que** la buse spécifique fait appel à une pompe à eau électrique (d) qui autorise l'automate (e) à agir précisément sur la vitesse , ce qui permet de sortir une vapeur d'eau (I) sans pression excessive - le débit de l'eau (d) agissant directement sur la pression, cette fonction est permise par le menu de l'automate (e).

9. Appareil autonome de désherbage multifonction basse et haute pression eau chaude et vapeur d'eau pour usage professionnel selon la revendication 1, les fonctions nettoyeur haute pression et hydro curage (m) sont **caractérisées par** l'adjonction d'une pompe à eau haute pression (j) entrainée par un moteur thermique commandé(F5) par l'automate (e), et une lance spécifique aux usages, ces fonctions sont accessibles par le menu de l'automate (e) qui permet également de régler l'eau à la température souhaitée.

10. Appareil autonome de désherbage multifonction basse et haute pression eau chaude et vapeur d'eau pour usage professionnel selon la revendication 1, la fonction arrosage public (k) est **caractérisée par** une alimentation d'eau effectuée par le pressostat (i), cette fonction est commandée (F4) par l'automate (e).

11. Appareil autonome de désherbage multifonction basse et haute pression eau chaude et vapeur d'eau pour usage professionnel selon la revendication 1, L'automate est couplé (f6) à un système de géolocalisation (o) fournissant la traçabilité cartographique des différents traitements effectués dans le temps, en opposition avec un appareil de géolocalisation installé sur une machine sans automation qui informerait des points de passage de la machine sans dissocier si celle-ci est en fonctionnement ou non, et sans distinguer les modes du traitement, ce qui permet à l'utilisateur de planifier le travail restant à réalise.

## Revendications modifiées

### Revendications modifiées conformément à la règle 137(2) CBE.

1. Appareil autonome monobloc de désherbage multifonction basse et haute pression eau chaude et vapeur d'eau pour usage professionnel répondant à une attente d'un poste de travail de 8 heures par 24 heures installé sur véhicule, à régulation permanente de température constante et réglable pour un usage intensif, dont la fonction principale est le désherbage eau chaude instantané à plus de 110° Celsius en sortie de lance aux fins d'éradiquer en totalité et sans additif les plantes sur les parties aériennes - collet et radicelle, et disposant de fonctions complémentaires de désherbage vapeur, lavage haute pression et arrosage de végétaux ; **caractérisée en ce qu'**il contient en son sein : 1) une alimentation électrique basse tension autonome par batteries à décharge lente(n) aux fins d'alimenter la pompe à eau - l'automate et la chaudière permettant une autonomie énergétique de 8 heures sans discontinue correspondant à un poste de travail, 2) une régulation permanente de la chaudière (g) gérée par automate (e) permettant le maintien constant de la température souhaitée selon le programme sélectionné, 3) l'intégration d'un système de filtration intégré et un circuit de distribution d'eau adapté comportant une pompe à eau permettant l'utilisation d'eaux chargées non potables sans porter dommage au fonctionnement de l'appareil, 4) un automate disposant de programmes spécifiques intégrés pour gérer les différents usages de: désherbage eau chaude (I), désherbage vapeur (I), arrosage public (k), lavage haute pression (m), et hydro curage (m), 5) une buse spécifique aux fonctions désherbage eau chaude et désherbage vapeur disposant d'un mécanisme interne d'accélération par phénomène venturi et diffusion de l'eau en périphérie de la buse, aux fins que le jet prenne la forme d'une cloche qui enveloppe la plante à traiter assurant une économie de consommation d'eau et une efficacité accrue, 6) une gestion du débit d'eau géré par automate aux fins de privilégier une température haute en sortie de chaudière ce qui optimise la consommation de l'eau , 7) un système de géolocalisation (o) connecté (f6) à l'automate (e) permettant d'obtenir une traçabilité géographique et temporelle des traitements effectués afin de faciliter la planification des traitements futurs selon les différents modes opérationnels.

2. Appareil autonome de désherbage multifonction basse et haute pression eau chaude et vapeur d'eau pour usage professionnel selon la revendication 1qui dispose d'une alimentation basse tension à décharge lente rechargeable (n) autorisant l'utilisation de la machine en toute sécurité sans usage de prise de terre sur une autonomie d'une journée de travail, **caractérisée par** : un voltage inférieur à 25 volts, une programmation spécifique (e) dans le but d'optimiser le rendement énergétique, l'utilisation de moteurs basse tension pour l'alimentation de la chaudière, et l'installation de batteries à décharge lente (n).

3. Appareil autonome multifonction basse et haute pression eau chaude et vapeur d'eau pour usage professionnel selon la revendication 1, la machine est commandée par un automate (e) disposant de programmes spécifiques permettant le maintien constant de la température de l'eau souhaitée selon les fonctions sollicitées, **caractérisée par** activation (f2) immédiate de la chaudière (g) et du débit d'eau (f3 et d) au regard des informations permanentes collectées du contrôle de la température en sortie de chaudière (f1 et h), cette régulation a pour objet que la chaudière modifie sa puissance de chauffe sur des positions intermédiaires sans s'arrêter.

4. Appareil autonome de désherbage multifonction basse et haute pression eau chaude et vapeur d'eau pour usage professionnel, selon la revendication 1 l'utilisation d'eau chargée non potable sur la désherbeuse autonome multifonction est **caractérisée par** une double système de filtration, en entrée filtre moyen (b) et sortie de cuve(a) à eau filtre fin (c), et une buse conique en sortie de lance disposant d'une ouverture assez importante(r) pour ne pas se boucher et laisser passer les déchets organiques et minéraux.

5. Appareil autonome de désherbage multifonction basse et haute pression eau chaude et vapeur d'eau pour usage professionnel selon la revendication 1 **caractérisée en ce que** la buse spécifique aux fonctions de désherbage eau chaude et vapeur dispose d' un mécanisme interne (r) freinant le débit de l'eau et économisant ainsi sa consommation, améliorant la diffusion circulaire (s) sur toute la surface à traiter, optimisant le remplissage du serpentin de la chaudière (g) afin d'améliorer le chauffage.

6. Appareil autonome de désherbage multifonction basse et haute pression eau chaude et vapeur d'eau pour usage professionnel selon les revendications 1 et 5 **caractérisée en ce que** la buse comporte un double mécanisme : interne (r) par phénomène venturi pour créer une turbulence améliorant la vitesse d'eau chaude en sortie tout en offrant un diamètre de passage assez large pour laisser passer les déchets organiques, externe (s) en diffusion de l'eau par jet en forme d'entonnoir permettant à la fois une diffusion circulaire et canalisée de l'eau sur toute la surface à traiter, la réunion de ces mécanismes permet de maintenir une eau à plus haute température du fait du temps réduit par la vitesse d'extraction et parfaitement diffusée sur la surface à traiter.

7. Appareil autonome de désherbage multifonction basse et haute pression eau chaude et vapeur d'eau pour usage professionnel selon la revendication 1, la fonction désherbeur eau chaude de la machine est caractériséepar une température et un débit d'eau réglables par l'utilisateur selon les variétés à traiter et la vitesse de passage, cette fonction est permise par le menu de l'automate (e),

8. Appareil autonome de désherbage multifonction basse et haute pression eau chaude et vapeur d'eau pour usage professionnel selon a revendication 1, **caractérisée en ce que** la buse spécifique fait appel à une pompe à eau électrique (d) qui autorise l'automate (e) à agir précisément sur la vitesse , ce qui permet de sortir une vapeur d'eau (I) sans pression excessive - le débit de l'eau (d) agissant directement sur la pression, cette fonction est permise par le menu de l'automate (e).

9. Appareil autonome de désherbage multifonction basse et haute pression eau chaude et vapeur d'eau pour usage professionnel selon la revendication 1, les fonctions nettoyeur haute pression et hydro curage (m) sont **caractérisées par** l'adjonction d'une pompe à eau haute pression (j) entrainée par un moteur thermique commandé(F5) par l'automate (e), et une lance spécifique aux usages, ces fonctions sont accessibles par le menu de l'automate (e) qui permet également de régler l'eau à la température souhaitée.

10. Appareil autonome de désherbage multifonction basse et haute pression eau chaude et vapeur d'eau pour usage professionnel selon la revendication 1, la fonction arrosage public (k) est **caractérisée par** une alimentation d'eau effectuée par la pompe à eau (d), cette fonction est commandée (F4) par l'automate (e).

11. Appareil autonome de désherbage multifonction basse et haute pression eau chaude et vapeur d'eau pour usage professionnel selon la revendication 1, **caractérisé en ce que** l'automate ayant mémoire des programmes opérationnels déclenchés dans le temps, est connecté (f6) à un système de géolocalisation (o) et recueille les données cartographiques (f6) du système de géolocalisation, regroupant ainsi l'ensemble des données et fournissant la traçabilité cartographique en distinguant les modes opérationnels de traitement dans le temps.
